# EUROPEAN PATENT SPECIFICATION

(11) **EP 3 997 672 B1**
(45) Date of publication and mention of the grant of the patent: **04.09.2024**
(21) Application number: 20841078.7
(22) Date of filing: 13.07.2020
(51) Int. Cl.: G07C 5/00, H04W 4/40, H04L 67/12

(54) **REMOTE PROFILE MANAGER FOR A VEHICLE**
FERNPROFILMANAGER FÜR EIN FAHRZEUG
GESTIONNAIRE DE PROFILS À DISTANCE POUR UN VÉHICULE

(30) Priority: 14.07.2019 US 201962873922 P
(43) Date of publication of application: 18.05.2022
(73) Proprietor: Platform Science, Inc., San Diego, CA 92121 (US)
(72) Inventor: KENNEDY, John, C., La Jolla, CA 92037 (US); KOPCHINSKY, Scott, La Jolla, CA 92037 (US); SON, Don, La Jolla, CA 92037 (US); FIELDS, Jacob, La Jolla, CA 92037 (US); DEMCHUK, Darrin, La Jolla, CA 92037 (US)
(74) Representative: Tomkins & Co
(86) International application number: PCT/US2020/041788
(87) International publication number: WO 2021/011461

(56) References cited:
- CN-A- 108 462 673
- CN-A- 109 714 420
- US-A1- 2013 006 715
- US-A1- 2019 179 029
- US-B1- 9 754 425
- US-B2- 10 334 638
- US-B2- 9 424 751

## Description

### Technical Field

The present invention generally relates to remote instructions for a vehicle.

### Background Art

The prior art discusses various techniques for wireless networks for vehicles.

U.S. Patent Number 9215590 for *Authentication Using Vehicle Data Pairing* discloses the wireless pairing of a portable device with an on-board computer of a vehicle for authenticating a transaction with a third party. Chinese Patent Application Publication No. CN 108 462 673 relates to a data synchronization system and method.

General definitions for terms utilized in the pertinent art are set forth below.

Beacon is a management frame that contains all of the information about a network. In a WLAN, Beacon frames are periodically transmitted to announce the presence of the network.

BLUETOOTH technology is a standard short range radio link that operates in the unlicensed 2.4 gigaHertz band.

FTP or File Transfer Protocol is a protocol for moving files over the Internet from one computer to another.

Hypertext Transfer Protocol ("HTTP") is a set of conventions for controlling the transfer of information via the Internet from a web server computer to a client computer, and also from a client computer to a web server, and Hypertext Transfer Protocol Secure ("HTTPS") is a communications protocol for secure communication via a network from a web server computer to a client computer, and also from a client computer to a web server by at a minimum verifying the authenticity of a web site.

Media Access Control (MAC) Address is a unique identifier assigned to the network interface by the manufacturer.

Memory generally includes any type of integrated circuit or storage device configured for storing digital data including without limitation ROM, PROM, EEPROM, DRAM, SDRAM, SRAM, flash memory, and the like.

Organizationally Unique Identifier (OUI) is a 24-bit number that uniquely identifies a vendor, manufacturer, or organization on a worldwide basis. The OUI is used to help distinguish both physical devices and software, such as a network protocol, that belong to one entity from those that belong to another.

Processor generally includes all types of processors including without limitation microprocessors, general purpose processors, gate arrays, array processors, application specific integrated circuits (ASICs) and digital signal processors.

SCP (Secure Connection Packet) is used to provide authentication between multiple devices or a local party and remote host to allow for secure communication or the transfer of computer files.

User Interface or UI is the junction between a user and a computer program. An interface is a set of commands or menus through which a user communicates with a program. A command driven interface is one in which the user enter commands. A menu-driven interface is one in which the user selects command choices from various menus displayed on the screen.

Web-Server is a computer able to simultaneously manage many Internet information-exchange processes at the same time. Normally, server computers are more powerful than client computers, and are administratively and/or geographically centralized. An interactive-form information-collection process generally is controlled from a server computer, to which the sponsor of the process has access.

There are multiple sources of data that can be utilized by a vehicle for efficiency and cost savings. However, there is a need for collecting, processing and interpreting the data in a manner that can be utilized by a vehicle.

### Summary Of The Invention

The present invention provides a system and method for utilizing a remote profile manager for a vehicle.

One aspect of the present invention is a system for utilizing data and computational information from on-vehicle and off-vehicle sources. The system comprises an assigning authority engine, a remote profile manager toolset, a plurality of databases, a plurality of cloud sources, a vehicle and a CVD within the vehicle. A plurality of contents of each of the plurality of databases are accessible and combinable by the assigning authority to produce a plurality of dynamic, temporal combinations of data elements and a plurality of instructions. The assigning authority is configured to use the remote profile manager toolset to execute the plurality of dynamic, temporal combinations. The plurality of dynamic, temporal combinations access data from the plurality of cloud sources comprising third party data and vehicle, timing, event, and/or positioning ("VTEP") data to inform a plurality of instruction sets delivered by the assigning authority. One or more elements of the VTEP data is used as the basis to synchronize timing between the data, or computational outputs of two or more sources of electronic information. A single coherent information picture is formed from fusing data and computational information from on-vehicle and off-vehicle sources.

Another aspect of the present invention is a remote profile manager for utilizing data and computational information from on-vehicle and off-vehicle sources. The remote profile manager is configured to: access and combine a plurality of contents of each of a plurality of databases by an assigning authority to produce a plurality of dynamic, temporal combinations of data elements and a plurality of instructions for a vehicle; execute the plurality of dynamic, temporal combinations; access data from the plurality of cloud sources comprising third party data and vehicle, timing, event, and/or positioning ("VTEP") data to inform a plurality of instruction sets delivered by the assigning authority; use one or more elements of the VTEP data as the basis to synchronize timing between the data, or computational outputs of two or more sources of electronic information; and form a single coherent information picture from fusing data and computational information from on-vehicle and off-vehicle sources.

Yet another aspect of the present invention a non-transitory computer-readable medium that stores a program that causes a processor to perform functions for utilizing a remote profile manager for a vehicle. The functions includes access and combine a plurality of contents of each of a plurality of databases by an assigning authority to produce a plurality of dynamic, temporal combinations of data elements and a plurality of instructions for a vehicle; execute the plurality of dynamic, temporal combinations; access data from the plurality of cloud sources comprising third party data and vehicle, timing, event, and/or positioning ("VTEP") data to inform a plurality of instruction sets delivered by the assigning authority; use one or more elements of the VTEP data as the basis to synchronize timing between the data, or computational outputs of two or more sources of electronic information; form a single coherent information picture from fusing data and computational information from on-vehicle and off-vehicle sources.

Yet another aspect of the present invention is a method for remote profile management for utilizing data and computational information from on-vehicle and off-vehicle sources. The method includes accessing a plurality of contents of each of a plurality of databases by an assigning authority. The method also includes combining the plurality of contents to produce a plurality of dynamic, temporal combinations of data elements and a plurality of instruction sets for a vehicle. The method also includes executing the plurality of dynamic, temporal combinations. The method also includes accessing data from a plurality of cloud sources comprising third party data and vehicle, timing, event, and/or positioning ("VTEP") data to inform the plurality of instruction sets delivered by the assigning authority. The method also includes using one or more elements of the VTEP data as a basis to synchronize timing between the data, or computational outputs of two or more sources of electronic information. The method also includes forming a single coherent information picture from fusing data and computational information from the on-vehicle and the off-vehicle sources.

Yet another aspect of the present invention is a system for utilizing data and computational information from on-vehicle and off-vehicle sources. The system comprises an assigning authority engine, a remote profile manager toolset, at least one on-vehicle source comprising on-vehicle data for a vehicle, and at least one off-vehicle source comprising at least one off-vehicle content. The at least one off-vehicle source is selected from a group comprising at least one database, at least one cloud source or at least one physical structure with a communication device. The assigning authority is configured to access and combine the at least one off-vehicle content and the on-vehicle data to produce a plurality of dynamic, temporal combinations of data elements and a plurality of instructions. The remote profile manager toolset is configured to execute the plurality of dynamic, temporal combinations to access vehicle, timing, event, and/or positioning ("VTEP") data to inform the plurality of instruction sets communicated by the assigning authority engine. The remote profile manager toolset is configured to use one or more elements of the VTEP data to synchronize timing between the on-vehicle data or a computational output of the off-vehicle content, to generate an information data set for the vehicle.

Yet another aspect of the present invention is a system for utilizing data and computational information from on-vehicle and off-vehicle sources. The system comprises an assigning authority engine, a remote profile manager toolset, a plurality of off-vehicle sources and a plurality of on-vehicle sources. The plurality of off-vehicle sources comprises a plurality of databases, at least one cloud source and at least one physical structure with a communication device, wherein each of the plurality of off-vehicle sources comprises off-vehicle content. The plurality of on-vehicle sources comprising a vehicle CVD, a plurality of sensors and an on-vehicle connected mobility device, each of the plurality of on-vehicle sources comprising on-vehicle data for a vehicle. The assigning authority is configured to access and combine the off-vehicle content and the on-vehicle data to produce a plurality of dynamic, temporal combinations of data elements and a plurality of instructions. The remote profile manager toolset is configured to execute the plurality of dynamic, temporal combinations to access vehicle, timing, event, and/or positioning ("VTEP") data to inform the plurality of instruction sets communicated by the assigning authority engine. The remote profile manager toolset is configured to use one or more elements of the VTEP data to synchronize timing between the on-vehicle data or a computational output of the off-vehicle content, to generate an information data set for the vehicle.

### Brief Description Of The Drawings

FIG. 1 is a block diagram of a system for remote profile management for utilizing data and computational information from on-vehicle and off-vehicle sources.
FIG. 2 is a block diagram of sources of data for remote profile management for a vehicle.
FIG. 3 is a block diagram of a system for remote profile management for utilizing data and computational information from on-vehicle and off-vehicle sources.
FIG. 4 is an illustration of multiple sensors on a truck.
FIG. 4A is an illustration of multiple sensors on a truck connected to a BUS for the truck.
FIG. 5 is a flow chart for a method for remote profile management for utilizing data and computational information from on-vehicle and off-vehicle sources.
FIG. 6 is a block diagram of system for a secure communication protocol for connecting a wireless device to a single access point in a vehicle.
FIG. 6A is a continuation of the block diagram of FIG. 1.
FIG. 7 is a flow chart of a method for a secure connection to a wireless network of a vehicle.
FIG. 8 is an illustration of a driver identifying a vehicle through connection of a tablet computer to an unpublished network.
FIG. 9 is an isolated view of general electrical components of a mobile communication device.
FIG. 10 is an isolated view of general electrical components of a server.
FIG. 11 is a flow chart of method for securely connecting a wireless device to a single access point in a vehicle.
FIG. 12 is an illustration of a system for securely connecting a wireless device to a single access point in a vehicle.
FIG. 13 is an illustration of a driver identifying a vehicle through connection of a tablet computer to an unpublished network.
FIG. 14 is a block diagram of a system for remote profile management for utilizing data and computational information from on-vehicle and off-vehicle sources.

### Best Mode(s) For Carrying Out The Invention

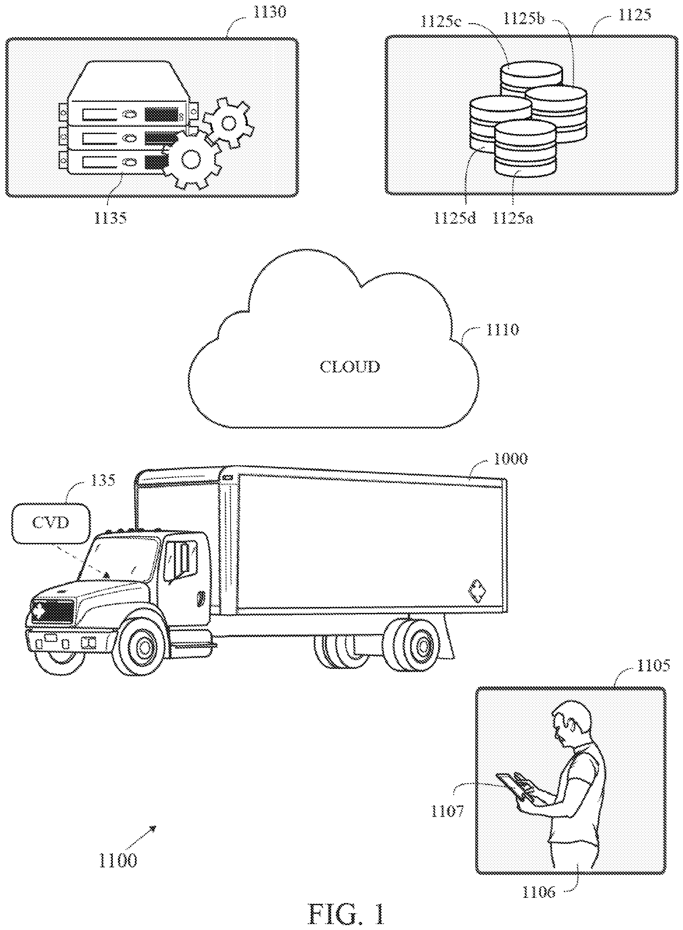

FIG. 1 is a block diagram of a system 1100 for remote profile management for utilizing data and computational information from on-vehicle and off-vehicle sources. The system 1100 includes a vehicle 1000, an assigning authority engine 1105, a remote profile manager (RPM) toolset 1130 with an RPM sync program 1135, and a plurality of databases 1125, both accessible through the cloud 1110. A vehicle 1000 preferably includes a CVD 135. The remote profile manager toolset 1130 preferably includes a server 1135. The plurality of databases 1125 is preferably composed of multiple databases 1125a-d.

The assigning authority engine 1105 preferably has a work assignment that has been generated for a specific vehicle 1000. In a preferred embodiment, the assigning authority engine 1105 resides at a server for the system 1100, and the RPM toolset 1130 resides at a separate server. Alternatively, the assigning authority engine 1105 and the RPM toolset 1130 reside at the same server. The assigning authority engine 1105 is preferably configured to access and combine off-vehicle content and on-vehicle data, along with the work assignment, to produce dynamic, temporal combinations of data elements and instructions for the vehicle 1000. Additionally, the assigning authority engine 1105 provides permission to various applications to share data for app-to-app integration. In one example, the assigning authority engine 1105 grants permission to a workflow application running on a mobile communication device for the vehicle 1000 to obtain data from a navigation application running on the mobile communication device. The assigning authority engine 1105 instructs the navigation application to hare the data with the workflow application. In one specific example, the share data is GPS coordinates for the vehicle.

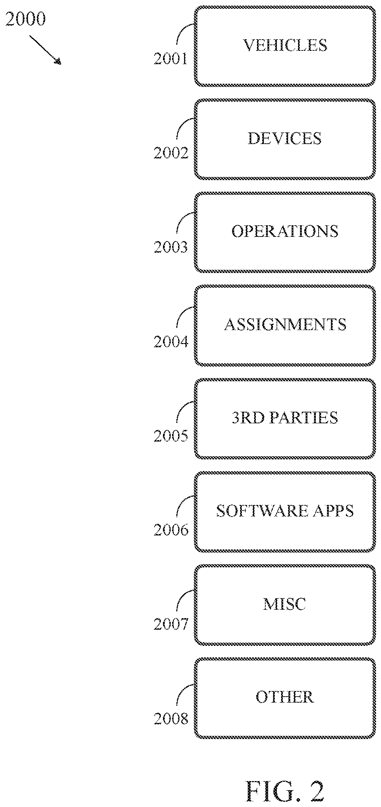

FIG. 2 is a block diagram of a set 2000 of sources of data for remote profile management for a vehicle. The set 2000 preferably includes vehicles 2001, devices 2002, operations 2003, assignments 2004, third parties 2005, software apps 2006, miscellaneous 2007 and other 2008.

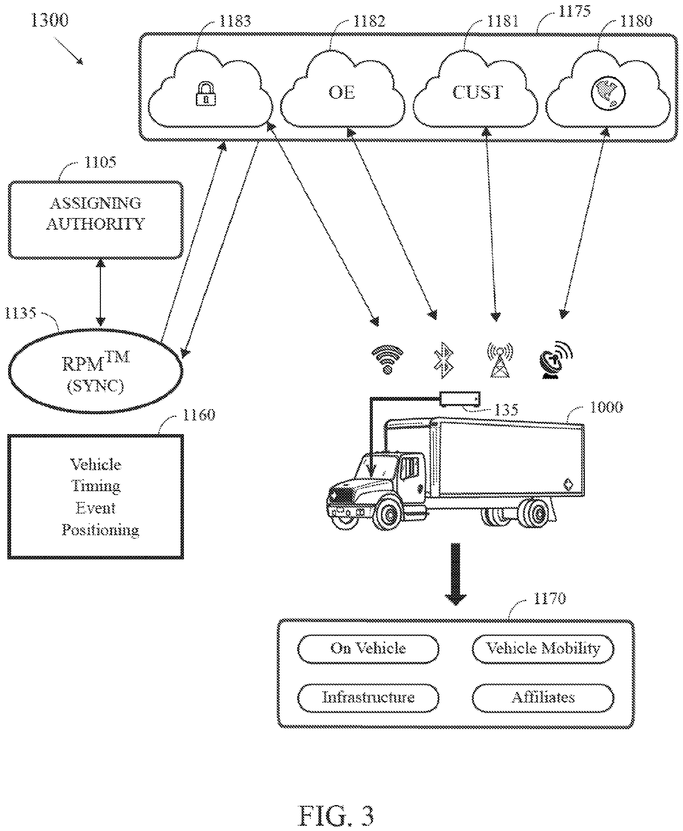

FIG. 3 is a block diagram of a system 1300 for remote profile management for utilizing data and computational information from on-vehicle and off-vehicle sources. As shown in FIG. 3, the system 1300 comprises an assigning authority engine 1105, a remote profile manager toolset 1130, databases (FIG. 2), cloud sources, a vehicle 1000 and a CVD 135 within the vehicle 1000. The cloud sources include main protected server/cloud 1183, an original equipment manufacturer server/cloud 1182, a customer server/cloud 1181 and a public server/cloud 1180. Multiple other servers/clouds and/or databases can be utilized with the present invention without departing from the scope and spirit of the claims. The cloud sources, databases, RPM 1130 and assigning authority engine 1105 communicate with the CVD 135 utilizing various wireless communication protocols including WiFi, cellular networks, BLUETOOTH, GPS, and the like. The contents of each of the databases (2001-2008) and cloud sources are accessible and combinable by the assigning authority engine 1105 to produce dynamic, temporal combinations of data elements and instructions for the vehicle 1000. The assigning authority engine 1105 is configured to use the remote profile manager tool set 1130 to execute the dynamic, temporal combinations. The dynamic, temporal combinations access data from the cloud sources comprising third party data and vehicle, timing, event, and/or positioning ("VTEP") data 1160 to inform instruction sets delivered by the assigning authority engine 1105. The instruction sets are preferably temporal permission for the on-vehicle sources and off-vehicle sources (e.g., applications) to connect and share data with each other. One or more elements of the VTEP data 1160 is used as the basis to synchronize timing between the data, or computational outputs of two or more sources of electronic information. A single coherent information picture 1170 is formed from fusing data and computational information from the on-vehicle and the off-vehicle sources. The new information data set combination (single coherent information picture) is a display of information generated from the combination of data from the on-vehicle sources and the off-vehicle sources. The data set can include dynamic route information (road condition changes due to weather, construction and the like), an updated driver's profile, vehicle engine date, cargo data, dynamic compliance rules, micro-navigation data, fuel stop data, inspection stations on the route, wireless communications connectivity status, time to destination, and the like. An example of a new information data set combination is imparting GPS location data from a truck/CVD onto cargo (the potato chips example). The new information data set combination is preferably any new combination of the connected data sources data for the specific vehicle of interest.

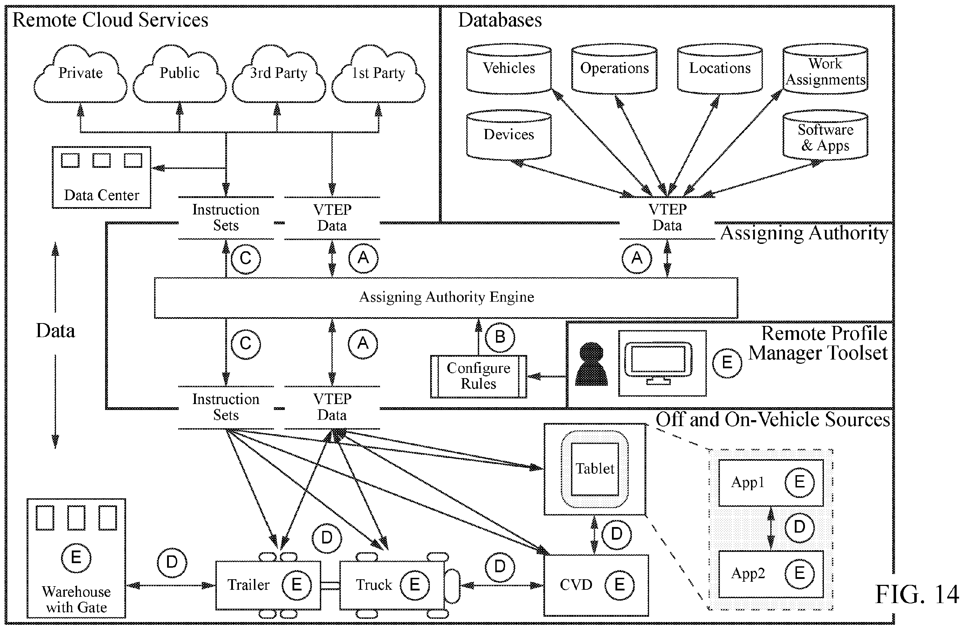

FIG. 14 is a block diagram of a system 1500 for remote profile management for utilizing data and computational information from on-vehicle and off-vehicle sources. At step A, VTEP data is gathered from multiple databases, cloud services and other off-vehicle sources, as well as on-vehicle sources. At step B, the RPM toolset is used to configure multiple assigning authority rules based on the collected VTEP data. At step C, multiple instruction sets are delivered to multiple cloud services, other off-vehicle sources and on-vehicle sources. At step D, off-vehicle sources such as physical infrastructure, vehicles, mobile devices, and mobile device applications share data per the delivered instruction sets. At step E, back office managers, physical infrastructure, on-vehicle and off-vehicle sources are provided with new information data set combinations enabling novel processing capabilities for the system.

In one embodiment, the off-vehicle source is a mobile application operating on a mobile device, and the data originates from the mobile application.

In another embodiment, app to app integration is utilized to generate the information data set. The app to app integration is performed at a remote server, within an app on a mobile device, on a CVD or a combination thereof. The cloud sources preferably comprise a public cloud source, a private cloud source, a hybrid cloud source, a multi-cloud source, a service provider cloud, a telematics service provider cloud, an original equipment manufacturer cloud (truck manufacturer, Tier 1 supplier, device supplier and the like), a customer cloud (end user) and/or a public cloud.

The system also preferably includes physical infrastructures with communication devices comprising at least one of a building, a gate, an access controlled point of entry, a parking structure, a weigh station, a toll collection structure, a fueling equipment and a vehicle service equipment. In one embodiment, a passive device on a physical structure broadcasts a unique ID which is received by a mobile device and a vehicle gateway device. If the passive device is a BLUETOOTH device, it broadcasts a BLUETOOTH advertisement. Multiple vehicle connected mobility devices are preferably used with the system 1600 and comprise at least one of a tablet computer, a mobile phone, a scanning device, a beacon, a RF passive or active communication device and a signature capture device.

Affiliates with the system 1600 include at least one of another vehicle authorized to share data via vehicle-to-vehicle (V2V), Cloud, or other RF communication protocols, a TMS system authorized by the assigning authority engine 1105 to directly take data from or provide data to the vehicle CVD 135, an authorized cloud provider, and an authorized user granted access by the assigning authority.

The vehicle 1000 is preferably one of a long-haul semi-truck, a bus, a sedan, a pick-up, a sports utility vehicle, a limousine, a sports car, a delivery truck, a van, or a mini-van.

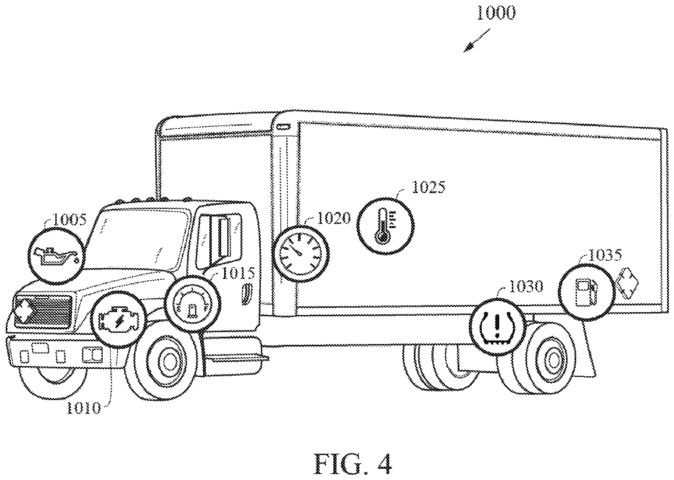

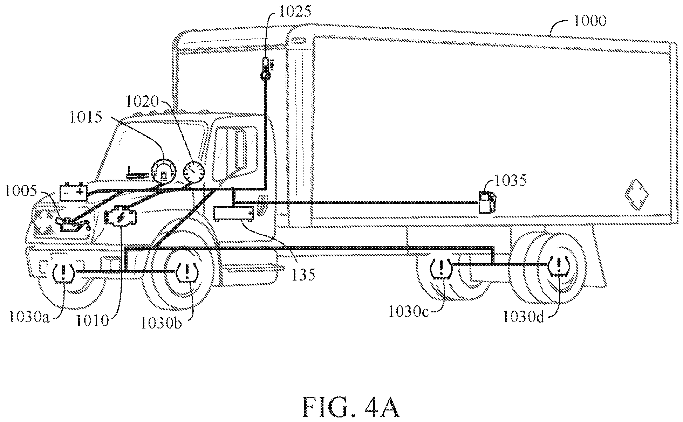

As shown in FIG. 3, the vehicle 1000 has multiple endpoints with direct connectivity to the CVD 135, and requires no routing through a cloud service. The endpoints are user interfaces or built in displays, devices connected through fixed or wireless connection to the vehicle's CVD 135, sensors connected through a vehicle bus (see FIG. 4A) to the CVD 135, or directly to the CVD 135 via wired or wireless connection, like devices. The vehicle 1000 is preferably a primary generator and source of VTEP data 1160.

The RPM 1130 preferably comprises a RPM sync 1135 for syncing with other devices, servers, the Cloud, the CVD and the like.

The real-time data for the vehicle 1000 preferably comprises a real-time speed of the vehicle, tire pressure values from a plurality of tire sensors, refrigeration/HVAC unit values, a plurality of fluid levels, a plurality of power unit values, a real-time fuel tank capacity, and a fuel type.

The plurality of configurable real-time vehicle data trigger events comprises a value outside of a predetermined range for the real-time data of the vehicle.

The real-time driver/operator profile comprises amount of time driving during a pre-determined time period, number of rest breaks during the pre-determined time period, license compliance data, physical disabilities and driving violations.

One example of an off-vehicle source is a fuel stop. A profile of a fuel stop preferably comprises real-time types of fuels available, set billing instructions, physical dimensions of a plurality of fuel pumps, GPS coordinates, hours of operation, food service availability, and resting area availability. The predetermined fueling time period is a time range to fuel the vehicle based on the real-time GPS location of the vehicle, the real-time speed of the vehicle, the distance to the selected fuel stop from the real-time GPS location of the vehicle, and the hours of operation of the fuel stop.

A configuration of the vehicle 1000 is preferably selected from one of a single trailer, a dual trailer, a triple trailer, and a refrigeration trailer. Another example of an off-vehicle source is a database (Federal, State local) with dynamic compliance rules. The dynamic compliance rules comprise speed limits, transport of toxic waste, the transport of refrigerated cargo, the rest durations for drivers/operators, the necessary insurance coverage, and the type of taxes and fees to be paid.

The workflow utilized by the assigning authority engine 1105 preferably comprises an origination location of the vehicle, a destination of the vehicle, a route to the destination, a cargo, a time of departure and a time of arrival. In one non-limiting example, the assigning authority engine 1105 receives data over the cloud from a customer server 1181 that a shipment of bags of potato chips were damaged in transit. The assigning authority engine 1105 accesses a CVD 135 or mobile device for the vehicle that delivered the bags of potato chips to determine the origination location, the destination location and the route. The assigning authority engine 1105 uses a navigation app on the mobile device (tablet computer) to determine the route, and an elevation of the route. The assigning authority engine 1105 determines that the vehicle traveled over a high elevation mountain range that probably resulted in the damage to the bags of potato chips due to a pressure differential. The assigning authority engine 1105 uses this information to reroute a subsequent shipment of bags of potato chips to avoid the high elevation mountain range.

FIG. 4 is an illustration of multiple sensors on a truck 1000. The vehicle/truck 1000 preferably comprises an oil level sensor 1005, an engine sensor 1010, a power sensor 1015, a refrigeration/HVAC sensor 1020, a temperature sensor 1025, a tire pressure sensor 1030, and a fuel sensor 1035. Those skilled in the pertinent art will recognize that multiple other sensors may be utilized without departing from the scope and spirit of the present invention. FIG. 4A is an illustration of multiple sensors on a truck connected to a data bus for the truck. Each of the sensors (oil level sensor 1005, engine sensor 1010, a power sensor 1015, a refrigeration/HVAC sensor 1020, a temperature sensor 1025, tire pressure sensors 1030a-d, and fuel sensor 1035) is preferably connected to the data bus for transferring data to an on-board computer of the vehicle 1000, or directly to the CVD 135. Alternatively, some or all of the sensors use wireless communications to communication with the CVD 135.

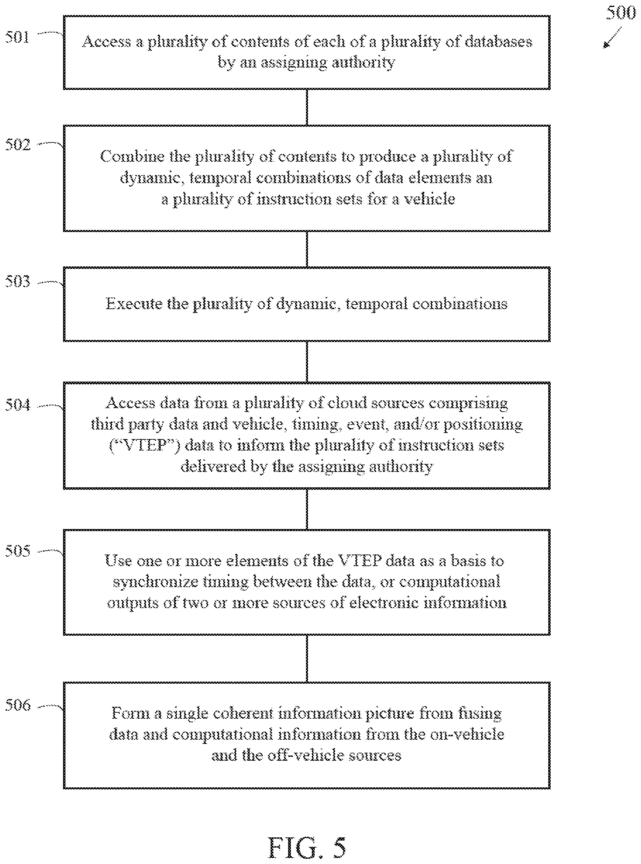

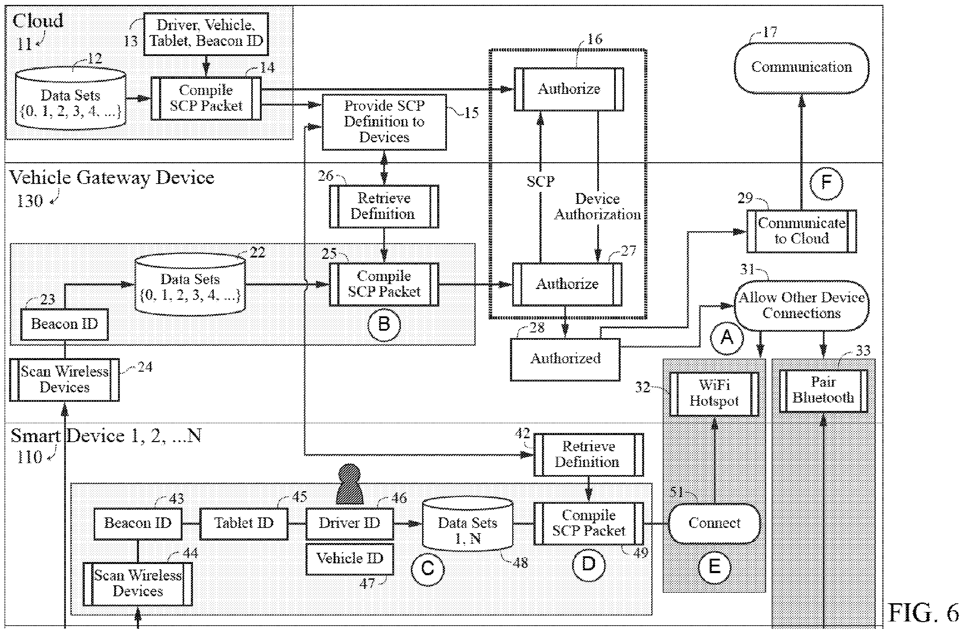

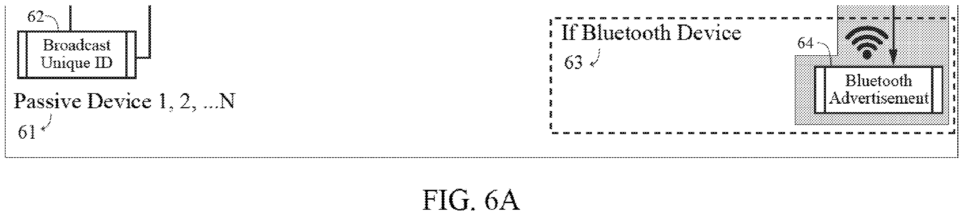

FIG. 5 is a flow chart for a method 500 for remote profile management for utilizing data and computational information from on-vehicle and off-vehicle sources. At block 501, the contents of each of a plurality of databases are accessed by an assigning authority engine. At block 502, the contents are combined to produce a plurality of dynamic, temporal combinations of data elements and a plurality of instruction sets for a vehicle. At block 503, the plurality of dynamic, temporal combinations is executed. At block 504, data from a plurality of cloud sources comprising third party data and vehicle, timing, event, and/or positioning ("VTEP") data is accessed to inform the plurality of instruction sets delivered by the assigning authority engine to the RPM. At block 505, one or more elements of the VTEP data is used as a basis to synchronize timing between the data, or computational outputs of two or more sources of electronic information. At block 506, a single coherent information picture is formed from fusing data and computational information from the on-vehicle and the off-vehicle sources. A system 10 for securely connecting a wireless device to a single access point in a vehicle for a predetermined work assignment is shown in FIGS. 6 and 6A. The system 10 preferably comprises a remote server (cloud) 11, a vehicle gateway device 130, a smart device 110 and a passive device 61. The vehicle gateway device 130 is preferably a connected vehicle device ("CVD").

The server/cloud 11 accesses dataset 12 and obtains driver information. Vehicle information, mobile device information (MAC address), passive device information (beacon ID) and other information to compile a SCP packet 14. At block 15, the server 11 provides SCP definitions to the vehicle gateway device 130 and the mobile device 110. At block 16 the server/cloud 11 authorizes the SCP. At block 17, the server/cloud 11 communicates with the vehicle gateway device 130.

The vehicle gateway device 130 uses datasets 22, with the beacon ID 23, a scan of wireless devices 24 along with the SCP definitions 26 received from the server/cloud 11 to compile a CVD compiled SCP packet 25. The CVD compiled SCP packet is sent to the cloud/server 11 at block 16 and authorization/validation of the CVD compiled SCP packet is received at block 27. At block 28 the SCP is authorized for broadcasting at the vehicle gateway device 130 a wireless network with a hidden and hashed SSID unique to the vehicle, the hidden and hashed SSID generated from the validated SCP packet. At block 29, the vehicle gateway device 130 communicates the broadcast with the server/cloud 11. At block 31, the vehicle gateway device 130 communicates with other devices, namely the smart device 110 over preferably a WiFi hotspot 32 and the passive device 61 by pairing using a BLUETOOTH communication protocol at block 33.

At block 49, the smart device (mobile device) 110 compiles a complied mobile device SCP packet from the SCP definitions 42, the data sets 48, the beacon ID 43, the Tablet ID 45, a driver ID 46, a vehicle ID 47 and scan of wireless devices 44. The mobile device 110 generates the hashed SSID and a passphrase from the complied mobile device SCP packet. At block 51, the mobile device 110 connects to the WiFi hotspot 32 of the vehicle device gateway 130. The passive device 61 broadcast a unique ID at block 62 which is received by the mobile device 110 and the vehicle gateway device 130. At block 63, if a BLUETOOTH device, it broadcasts a BLUETOOTH advertisement at block 64. The SCP is defined by an assigning authority in the server/cloud 11. The server/cloud 11 sends the SCP definition and any other required data in datasets to the CVD 130 and the mobile device 110. The CVD 130 adds the contextual data from local datasets to the sever-sent data to compile its SCP based definition. The local datasets include data wirelessly scanned from passive devices, preferably transmitting a BLUETOOTH beacon. Other local datasets include information from the vehicle. The CVD 130 sends its compiled SCP packet to the server 11 for authorization. The server 11 verifies the CVD compiled SCP packet, and if valid, the server 11 transmits a validation/approval signal to the CVD 130. The CVD then generates an access point SSID/passphrase with SCP. Likewise, the mobile device 110 utilizes contextual data from local datasets to compile its SCP based on the definitions. The mobile device 110 connects to the access point of the CVD 130 using the SCP. The CVD 130 and the mobile device 110 also connect to the passive device 61 since it is part of the SCP definition.

As used by the assigning authority engine 1105, a predetermined work assignment is a temporal event with a fixed start and completion based on assignable boundary conditions. The assignable boundary condition is at least one of a predetermined time period, a geographical destination, and a set route. Alternatively, the assignable boundary condition is any feature with a beginning and a termination. The assigning authority is performed by a person or persons, who have the appropriate authority and mechanisms to assign specific tasks and assets to a specific vehicle and vehicle operator or custodian, and to assign workflow assignments to same. The predetermined work assignment is assigned to a known person or entity that has its own primary networked device accessible through a password protected user interface, a specific name and password that auto-populates or otherwise automatically satisfies a plurality of credentials requirements, wherein the plurality of credential requirements are automatically available or revoked based on the assignable boundary condition identified in a pairing event.

The CVD 130 preferably broadcasts a WiFi wireless network with a hidden and hashed SSID unique to the host vehicle and protected by a unique, dynamically generated and hashed passphrase. The vehicle ID is entered into an application on the tablet that is then converted to the same hashed SSID and passphrase, which allows the tablet to attempt to connect to the corresponding CVD WiFi network and begin communication.

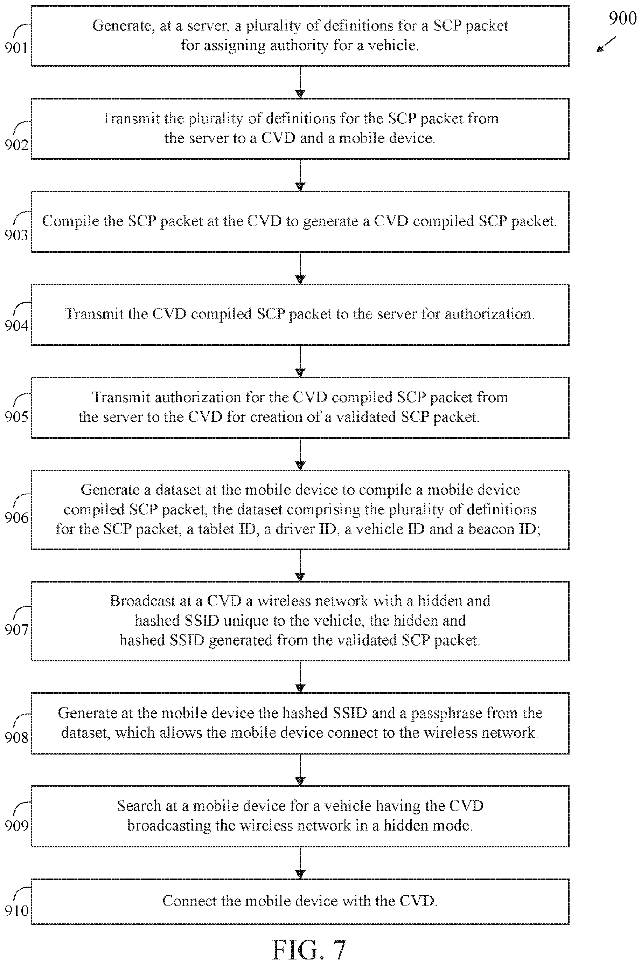

A method 900 for a secure connection to a wireless network of a vehicle is shown in FIG. 7. At block 901, a server generates definitions for a SCP packet for assigning authority for a vehicle. At block 902 the server transmits the definitions for the SCP packet to a CVD and a mobile device. At block 903, the CVD compiles the SCP packet to generate a CVD compiled SCP. At block 904, the CVD transmits the CVD compiled SCP to the server for authorization. At block 905, the server transmits authorization for the CVD compiled SCP from to the CVD for creation of a validated SCP. At block 906, the mobile device generates a dataset to compile a mobile device compiled SCP. At block 907, the CVD broadcasts at a wireless network with a hidden and hashed SSID unique to the vehicle. The hidden and hashed SSID is generated from the validated SCP packet. At block 908, the mobile device generates the hashed SSID and a passphrase from the dataset, which allows the mobile device connect to the wireless network. At block 909, the mobile device searches for a vehicle having the CVD broadcasting the wireless network in a hidden mode. At block 910, the mobile device securely connects with the CVD.

One embodiment utilizes a system for vehicle to mobile device secure wireless communications. The system comprises a vehicle 210, a CVD 130, a mobile device 110 and a passive communication device 61. The vehicle 210 comprises an on-board computer with a memory having a vehicle identification number (VIN), a connector plug, and a motorized engine. The CVD 130 comprises a processor, a WiFi radio, a BLUETOOTH radio, a memory, and a connector for mating with the connector plug of the vehicle. The mobile device 110 comprises a graphical user interface, a mobile application, a processor, a WiFi radio, and a cellular network interface. The passive communication device 61 operates on a BLUETOOTH communication protocol. The server 11 is configured to generate a plurality of definitions for a SCP packet for assigning authority for the vehicle. The server 11 is configured to transmit the plurality of definitions for the SCP packet from the server to the CVD 130 and the mobile device 110. The CVD 130 is configured to compile the SCP packet to generate a CVD compiled SCP. The CVD 130 is configured to transmit the CVD compiled SCP to the server 11 for authorization. The server 11 is configured to transmit authorization for the CVD compiled SCP to the CVD 130 for creation of a validated SCP. The mobile device 110 is configured to generating a dataset to compile a mobile device compiled SCP. The CVD 130 is configured to broadcast a wireless network with a hidden and hashed SSID unique to the vehicle, the hidden and hashed SSID generated from the validated SCP packet. The mobile device 110 is configured to generate the hashed SSID and a passphrase from the dataset, which allows the mobile device connect to the wireless network. The mobile device 110 is configured to search for a vehicle having the CVD broadcasting the wireless network in a hidden mode. The mobile device 110 is configured to connect to the CVD 130 over the wireless network.

The dataset preferably comprises at least one of a plurality of definitions for the SCP packet, a tablet ID, a driver ID, a vehicle ID, a beacon ID, identified or defined entity/participant to the transaction, descriptions, actions, or states of thing, characteristics of identifiable devices, when present in a certain proximity and/or context.

Optionally, the mobile device 110 connects to a passive device, the passive device operating on a BLUETOOTH communication protocol. The passive device 61 is preferably a BLUETOOTH enabled device advertising a unique ID as a beacon or a complex system (speaker, computer, etc.) that emits BLUETOOTH enabled device advertising a unique ID as a beacon. The mobile device 110 preferably receives input from a driver of the vehicle, and/or the server 11 contains the assigning authority that generates the SCP definitions.

The passive device 61 is preferably an internal device in the vehicle or an external device posted on a gate to a facility and generating a beacon. The beacon from the passive device is preferably a mechanism to ensure that the connection between the mobile device 110 and the CVD 130 occurs at a specific physical location dictated by the assigning authority through the server 11. Preferably, the automatic connection between the mobile device 110 and the CVD occurs because the assigning authority, through the server, has dictated that it occur.

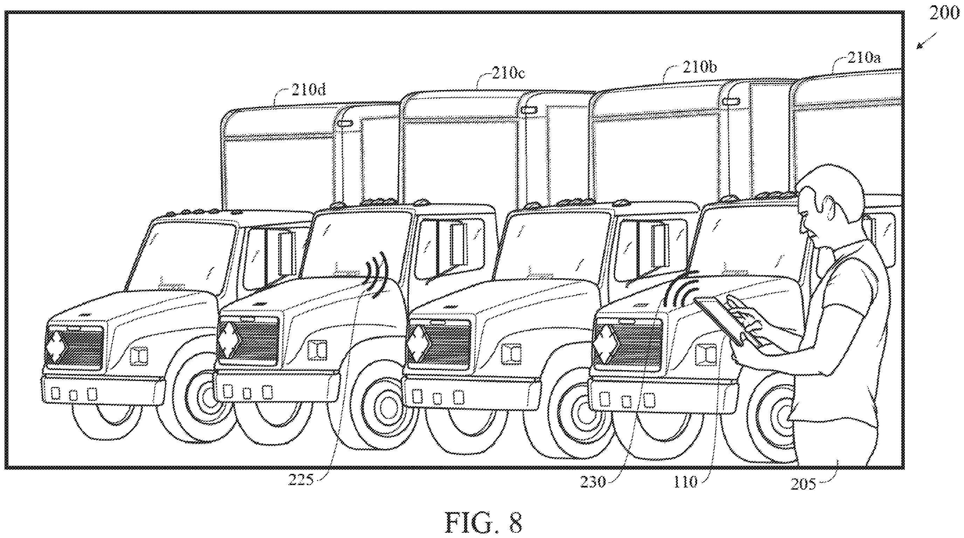

As shown in FIG. 8, a staging yard for trucks 210a-201d, each of a multitude of trucks 210a-210d broadcast a wireless signal for a truck specific network, with one truck 210c broadcasting a wireless signal 225. However, the SSID is not published so unless a driver is already in possession of the SSID, the driver will not be able to pair the tablet computer 110 with the CVD 130 of the truck 210 to which the driver is assigned. So even though the wireless signals are being "broadcast", they will not appear on a driver's tablet computer 110 (or other mobile device) unless the tablet computer 110 has already been paired with the CVD 130 of the vehicle 210. A driver 205 in possession of a tablet computer 110 pairs, using a signal 230, the tablet computer 110 with the wireless network 225 of the CVD of the truck 210c, and thus the driver locates the specific truck 210c he is assigned to in a parking lot full of identical looking trucks 210a-d.

For example, on an IPHONE^{®} device from Apple, Inc., the "UDID," or Unique Device Identifier is a combination of forty numbers and letters, and is set by Apple and stays with the device forever.

For example, on an ANDROID based system, one that uses Google Inc.'s ANDROID operating system, the ID is set by Google and created when an end-user first boots up the device. The ID remains the same unless the user does a "factory reset" of the phone, which deletes the phone's data and settings.

The mobile communication device 110, or mobile device, is preferably selected from mobile phones, smartphones, tablet computers, PDAs and the like. Examples of smartphones and the device vendors include the IPHONE^{®} smartphone from Apple, Inc., the DROID^{®} smartphone from Motorola Mobility Inc., GALAXY S^{®} smartphones from Samsung Electronics Co., Ltd., and many more. Examples of tablet computing devices include the IPAD^{®} tablet computer from Apple Inc., and the XOOM^{™} tablet computer from Motorola Mobility Inc. The mobile communication device 110 then a communication network utilized preferably originates from a mobile communication service provider (aka phone carrier) of the customer such as VERIZON, AT&T, SPRINT, T-MOBILE, and the like mobile communication service providers, provide the communication network for communication to the mobile communication device of the end user. Wireless standards utilized include 802.11a, 802.11b, 802.11g, AX.25, 3G, CDPD, CDMA, GSM, GPRS, radio, microwave, laser, Bluetooth, 802.15, 802.16, and IrDA.

BLUETOOTH^{™} technology operates in the unlicensed 2.4 GHz band of the radio-frequency spectrum, and in a preferred embodiment the secondary device 30 and/or primary device 25 is capable of receiving and transmitting signals using BLUETOOTH^{™} technology. LTE Frequency Bands include 698-798MHz (Band 12, 13, 14, 17); 791-960MHz (Band 5, 6, 8, 18,19,20); 1710-2170MHz (Band 1, 2, 3, 4, 9, 10, 23, 25, 33, 34, 35, 36, 37, 39); 1427-1660.5MH (Band 11, 21, 24); 2300-2700MHz (Band 7, 38, 40, 41); 3400-3800MHz (Band 22, 42, 43), and in a preferred embodiment the secondary device 30 and/or the primary device 25 is capable of receiving and transmitting signals using one or more of the LTE frequency bands. WiFi preferably operates using 802.11a, 802.11b, 802.11g, 802.11n communication formats as set for the by the IEEE, and in in a preferred embodiment the secondary device 30 and/or the primary device 25 is capable of receiving and transmitting signals using one or more of the 802.11 communication formats. Near-field communications (NFC) may also be utilized.

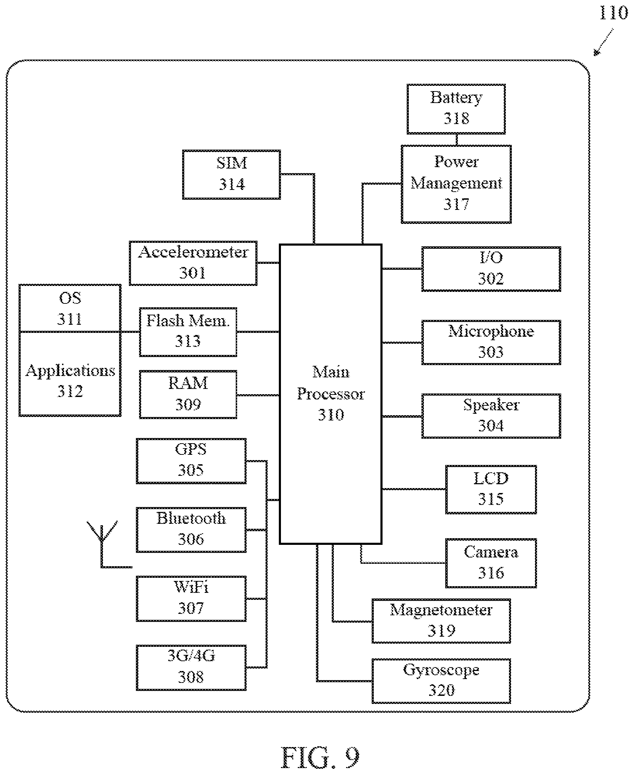

As shown in FIG. 9, a typical mobile communication device 110 preferably includes an accelerometer 301, I/O (input/output) 302, a microphone 303, a speaker 304, a GPS chipset 305, a Bluetooth component 306, a Wi-Fi component 307, a 3G/4G component 308, RAM memory 309, a main processor 310, an OS (operating system) 311, applications/software 312, a Flash memory 313, SIM card 314, LCD display 315, a camera 316, a power management circuit 317, a battery 318 or power source, a magnetometer 319, and a gyroscope 320.

Each of the interface descriptions preferably discloses use of at least one communication protocol to establish handshaking or bi-directional communications. These protocols preferably include but are not limited to XML, HTTP, TCP/IP, Serial, UDP, FTP, Web Services, WAP, SMTP, SMPP, DTS, Stored Procedures, Import/Export, Global Positioning Triangulation, IM, SMS, MMS, GPRS and Flash. Databases that may be used with the system preferably include but are not limited to MSSQL, Access, MySQL, Progress, Oracle, DB2, Open Source DBs and others. Operating system used with the system preferably include Microsoft 2010, XP, Vista, 200o Server, 2003 Server, 2008 Server, Windows Mobile, Linux, Android, Unix, I series, AS 400 and Apple OS.

The underlying protocol at the cloud server 11, is preferably Internet Protocol Suite (Transfer Control Protocol/Internet Protocol ("TCP/IP")), and the transmission protocol to receive a file is preferably a file transfer protocol ("FTP"), Hypertext Transfer Protocol ("HTTP"), Secure Hypertext Transfer Protocol ("HTTPS") or other similar protocols. The transmission protocol ranges from SIP to MGCP to FTP and beyond. The protocol at the authentication server 40 is most preferably HTTPS.Wireless standards include 802.11a, 802.11b, 802.11g, AX.25, 3G, CDPD, CDMA, GSM, GPRS, radio, microwave, laser, Bluetooth, 802.15, 802.16, and IrDA.

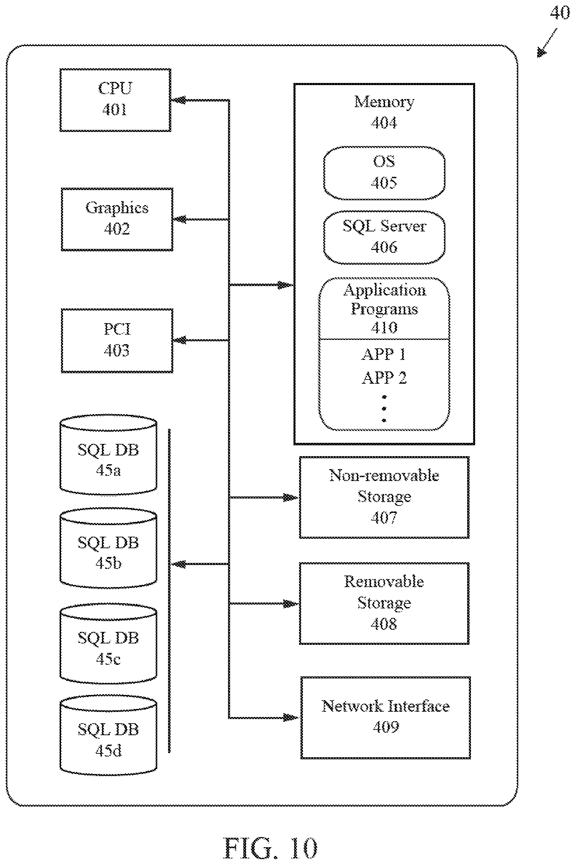

Components of a cloud computing server 40 of the system, as shown in FIG. 10, preferably includes a CPU component 401, a graphics component 402, PCI/PCI Express 403, memory 404, non-removable storage 407, removable storage 408, Network Interface 409, including one or more connections to a fixed network, and SQL database(s) 45a-45d, which includes the venue's CRM. Included in the memory 404, is an operating system 405, a SQL server 406 or other database engine, and computer programs/software 410. The server 40 also preferably includes at least one computer program configured to receive data uploads and store the data uploads in the SQL database. Alternatively, the SQL server can be installed in a separate server from the server 40.

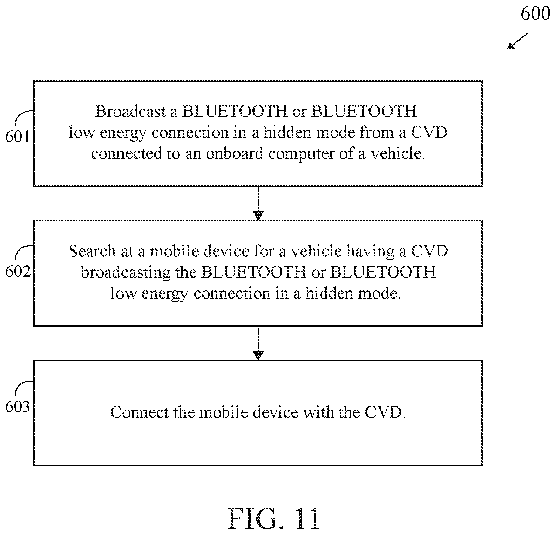

A flow chart for an alternative method 600 for a secure connection to a wireless network of a vehicle is shown in FIG. 11. At block 601, the CVD broadcasts an encrypted, blind SSID based on specific vehicle data. At block 602, leveraging the known vehicle data and the encryption algorithm a mobile device searches for a vehicle having a CVD broadcasting the wireless network. At block 603, the mobile device is connected with the CVD.

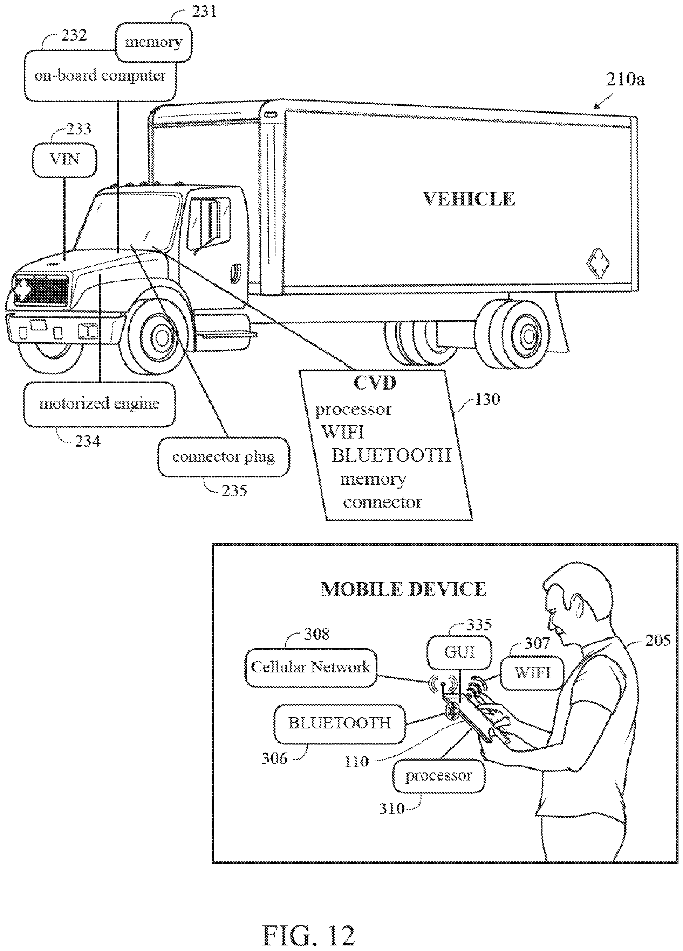

A system for a secure connection to a wireless network of a vehicle is shown in FIG. 12. A truck 210a. Those skilled in the pertinent art will recognize that the truck 210a may be replaced by any type of vehicle (such as a bus, sedan, pick-up, sport utility vehicle, limousine, sports car, delivery truck, van, mini-van, motorcycle, and the like) without departing from the scope of spirit of the present invention. The truck 210a preferably comprises a motorized engine 234, a vehicle identification number ("VIN"), an on-board computer 232 with a memory 231 and a connector plug 235. The on-board computer 232 preferably has a digital copy of the VIN in the memory 231. The on-board computer 232 is preferably in communication with the motorized engine 234. The truck 210a may also have a GPS component for location and navigation purposes, a satellite radio such as SIRIUS satellite radio, a driver graphical interface display, a battery, a source of fuel and other components found in a conventional long distance truck.

Also in the truck 210a is a CVD 130 comprising a processor, a WiFi radio, a BLUETOOTH radio, a memory and a connector to connect to the connector plug of the on-board computer 232.

A driver 205 preferably has a mobile communication device such as a tablet computer 110 in order to pair with a wireless network generated by the CVD 130 of the truck 210a. The tablet computer 110 preferably comprises a graphical user interface 335, a processor 310, a WiFi radio 307, a BLUETOOTH radio 306, and a cellular network interface 308.

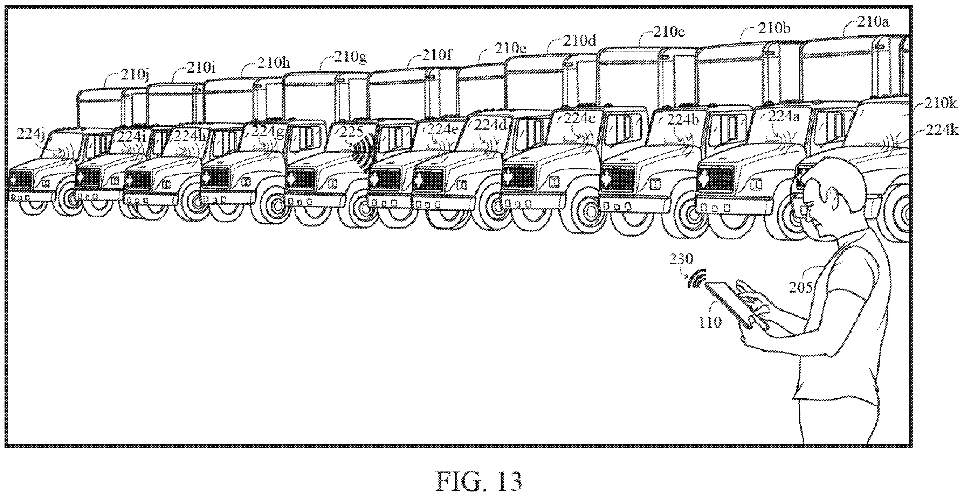

As shown in FIG. 13, a staging yard for trucks 210a-210k, each of a multitude of trucks 210a-210k broadcast a wireless signal 224a-k for a truck specific network, with one truck 210f broadcasting a wireless signal 225. However, all of the wireless signal 224a-224k and 225 do not publish their respective SSID so that a mobile device 110 must already be paired with the CVD 130 of the truck 210 in order to connect to the truck based wireless network 224a-224k or 225 of each of the CVDs 130 of each of the trucks 210a-210k. A driver 205 in possession of a tablet computer 110 pairs with the specific truck wireless network 225 of the CVD 130 of the truck 210f, and thus the driver locates the specific truck 210f he is assigned to in a parking lot full of identical looking trucks 210a-210k.

One embodiment is a system for utilizing a remote profile manager for vehicle dynamic compliance with multiple vehicle statutes and regulations. The system comprises a truck 210, a CVD 130, a tablet computer 110, a server 140 and a plurality of databases. The vehicle comprises an on-board computer with a memory having a vehicle identification number (VIN), a connector plug, and a motorized engine. The CVD 130 comprises a processor, a WiFi radio, a BLUETOOTH radio, a memory, and a connector for mating with the connector plug of the vehicle. The tablet computer 110 comprises a graphical user interface, a processor, a WiFi radio, a BLUETOOTH radio, and a cellular network interface. A location of the truck 210 is determined using a GPS component of the truck 210. The location of the truck 210 is transmitted to the server 140 by the CVD. The server 140 retrieves real-time compliance rules for the location of the truck from the plurality of databases, which are preferably State vehicle databases, municipal vehicle databases, county vehicle databases, and Federal vehicle databases. The server 140 transmits the real-time compliance rules to CVD 130 for display on the tablet computer 110 so that a driver of the truck 210 can stay in real-time compliance with State and Federal motor vehicle and driving rules. The rules pertain to speed limits, transport of toxic waste, the transport of refrigerated cargo, the rest durations for drivers, the necessary insurance coverage, the type of taxes and fees to be paid, and the like. The display on the tablet computer is preferably in the form of a visual alert, an audio alert or a haptic alert. Other displays include forms such as attestation forms, and data such as timers, current speed limits, and the like. The trigger for each jurisdiction is preferably from the GPS of the truck 210, the speed of the truck 210, cellular or WiFi triangulation from a network, and the like.

The CVD 130 obtains the vehicle identification number (VIN) from the on-board computer and transmits the VIN with the location to the server 140 for verification of the truck 210.

Another embodiment is a system for utilizing a remote profile manager for utilizing multiple vehicle odometer values. The system comprises a vehicle 210, a CVD 130, a tablet computer 110, a server 140 and a plurality of databases. The vehicle comprises an on-board computer with a memory having a vehicle identification number (VIN), a connector plug, a motorized engine, an odometer component from an engine source, an odometer component from a dashboard source, an odometer component from a chassis source, and an odometer component from a transmission source. Thus, the truck 210 has a multiple of odometers that can be used to determine a mileage of the truck 210. The connected vehicle device (CVD) 130 comprises a processor, a WiFi radio, a BLUETOOTH radio, a memory, and a connector for mating with the connector plug of the vehicle. The tablet computer 110 comprises a graphical user interface, a processor, a WiFi radio, a BLUETOOTH radio, and a cellular network interface. Each of the odometer component from an engine source, the odometer component from a dashboard source, the odometer component from a chassis source, and the odometer component from a transmission source generates an odometer value. The CVD 130 generates a delta value for odometer value relative to a control odometer value. The CVD 130 monitors the odometer value from each of the odometer component from an engine source, the odometer component from a dashboard source, the odometer component from a chassis source, and the odometer component from a transmission source. The CVD 130 generates a new odometer value for one of the odometer component from an engine source, the odometer component from a dashboard source, the odometer component from a chassis source, and the odometer component from a transmission source, and the CVD modifies the odometer value by the delta value to generate the new odometer value.

An operating system controls the execution of other computer programs, running of the PSO platform, and provides scheduling, input-output control, file and data management, memory management, and communication control and related services. The operating system may be, for example Windows (available from Microsoft, Corp. of Redmond, Wash.), LINUX or other UNIX variants (available from Red Hat of Raleigh, N.C. and various other vendors), Android and variants thereof (available from Google, Inc. of Mountain View, Calif.), Apple OS X, iOs and variants thereof (available from Apple, Inc. of Cupertino, Calif.), or the like.

The system and method described in connection with the embodiments disclosed herein is preferably embodied directly in hardware, in a software module executed by a processor, or in a combination of the two. A software module preferably resides in flash memory, ROM memory, EPROM memory, EEPROM memory, RAM memory, registers, a hard disk, a removable disk, a CD-ROM, or any other form of storage medium known in the art. An exemplary storage medium is preferably coupled to the processor, so that the processor reads information from, and writes information to, the storage medium. In the alternative, the storage medium is integral to the processor. In additional embodiments, the processor and the storage medium reside in an Application Specific Integrated Circuit (ASIC). In additional embodiments, the processor and the storage medium reside as discrete components in a computing device. In additional embodiments, the events and/or actions of a method reside as one or any combination or set of codes and/or instructions on a machine-readable medium and/or computer-readable medium, which are incorporated into a computer software program.

In additional embodiments, the functions described are implemented in hardware, software, firmware, or any combination thereof. If implemented in software, the functions are stored or transmitted as one or more instructions or code on a computer-readable medium. Computer-readable media includes both computer storage media and communication media including any medium that facilitates transfer of a computer program from one place to another. A storage medium is any available media that is accessed by a computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures, and that can be accessed by a computer. Also, any connection is termed a computer-readable medium. For example, if software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. "Disk" and "disc", as used herein, include compact disc (CD), laser disc, optical disc, digital versatile disc (DVD), floppy disk and BLU-RAY disc where disks usually reproduce data magnetically, while discs usually reproduce data optically with lasers. Combinations of the above should also be included within the scope of computer-readable medium. A computer program code for carrying out operations of the Present Invention is preferably written in an object oriented, scripted or unscripted programming language such as C++, C#, SQL, Java, Python, Javascript, Typescript, PHP, Ruby, or the like.

Each of the interface descriptions preferably discloses use of at least one communication protocol to establish handshaking or bi-directional communications. These protocols preferably include but are not limited to XML, HTTP, TCP/IP, Serial, UDP, FTP, Web Services, WAP, SMTP, SMPP, DTS, Stored Procedures, Import/Export, Global Positioning Triangulation, IM, SMS, MMS, GPRS and Flash. The databases used with the system preferably include but are not limited to MSSQL, Access, MySQL, Oracle, DB2, Open Source DBs and others. Operating system used with the system preferably include Microsoft 2010, XP, Vista, 200o Server, 2003 Server, 2008 Server, Windows Mobile, Linux, Android, Unix, I series, AS 400 and Apple OS.The underlying protocol at a server, is preferably Internet Protocol Suite (Transfer Control Protocol/Internet Protocol ("TCP/IP")), and the transmission protocol to receive a file is preferably a file transfer protocol ("FTP"), Hypertext Transfer Protocol ("HTTP"), Secure Hypertext Transfer Protocol ("HTTPS"), or other similar protocols. The protocol at the server is preferably HTTPS.

## Claims

1. A system (1300) for utilizing data and computational information from on-vehicle and off-vehicle sources, the system comprising:
an assigning authority engine (1105);
a remote profile manager toolset (1130);
at least one off-vehicle source comprising at least one off-vehicle content, the at least one off-vehicle source selected from a group comprising at least one database, at least one cloud source, or at least one physical structure with a communication device; and
at least one on-vehicle source comprising on-vehicle data for a vehicle;
wherein the assigning authority is configured to access and combine the at least one off-vehicle content and the on-vehicle data to produce a plurality of dynamic, temporal combinations of data elements and a plurality of instructions;
wherein the remote profile manager toolset is configured to execute the plurality of dynamic, temporal combinations to access vehicle, timing, event, and/or positioning, VTEP, data (1160) to inform the plurality of instruction sets communicated by the assigning authority engine;
wherein the remote profile manager toolset is configured to use one or more elements of the VTEP data to synchronize on-vehicle data elements or a computational output of the off-vehicle content, to generate a new information data set combination.

2. The system according to claim 1 wherein the at least one off-vehicle source is at least one cloud source selected from the group comprising a public cloud source, a private cloud source, a hybrid cloud source, or a multi-cloud source.

3. The system according to claim 2 wherein the group of the at least one cloud source further comprises a telematics service provider cloud, a customer cloud, or a third party service provider cloud.

4. The system according to claim 2 wherein the assigning authority is configured to authorize the at least one cloud source to directly receive data from or provide data to a vehicle CVD, an authorized cloud provider, or an authorized user granted access by the assigning authority.

5. The system according to claim 1 wherein an on-vehicle source comprises a processor, a WiFi radio, a BLUETOOTH radio, a memory storing vehicle data, and a connector for pairing with a connector plug of the vehicle.

6. The system according to claim 1 further comprising at least one vehicle connected mobility device is selected from the group comprising a tablet computer, a mobile phone, a scanning device, a beacon, a RF passive or active communication device or a signature capture device.

7. The system according to claim 1 wherein the at least one off-vehicle source is at least one physical infrastructure with the communication device selected from the group comprising a building, a gate, an access controlled point of entry, a parking structure, a weigh station, a toll collection structure, a fueling equipment and a vehicle service equipment.

8. The system according to claim 1 further comprising at least one affiliate comprising at least one other vehicle authorized to share data via vehicle to vehicle communications.

9. The system according to claim 1 wherein the vehicle comprises an on-board computer with a memory, having a vehicle identification number, VIN, and a connector plug.

10. The system according to claim 1 wherein the assigning authority engine comprises a predetermined work assignment having a temporal event with a fixed start and completion based on at least one assignable boundary condition.

11. The system according to claim 10 wherein the at least one assignable boundary condition is at least one of a predetermined time period, a geographical destination, and a set route.

12. The system according to claim 1 wherein the at least one off-vehicle source is at least one database and a mobile application operating on a mobile device, and the data originates from the mobile application.

13. The system according to claim 1 wherein mobile application to mobile application integration is utilized to generate the information data set.

14. The system according to claim 13 wherein the application to application integration is performed at a remote server, within an application on a mobile device, on an on-vehicle device, or a combination thereof.

15. A method (500) for remote profile management for utilizing data and computational information from on-vehicle and off-vehicle sources, the method comprising:
accessing (501), by an assigning authority engine, on-vehicle data and at least one off-vehicle content from at least one off-vehicle source selected from a group comprising at least one database, at least one cloud source, or at least one physical structure with a communication device;
combining (502), at the assigning authority engine, the on-vehicle data and the at least one off-vehicle content to produce a plurality of dynamic, temporal combinations of data elements and a plurality of instruction sets for a vehicle;
executing (503), at a remote profile manager toolset, the plurality of dynamic, temporal combinations to access vehicle, timing, event, and/or positioning, VTEP, data to inform the plurality of instruction sets communicated by the assigning authority engine; and
using (505), at the remote profile manager toolset, one or more elements of the VTEP data to synchronize timing between the on-vehicle data or a computational output of the off-vehicle content, to generate an information data set for a vehicle.

## Patentansprüche

1. System (1300) zur Verwendung von Daten und Berechnungsinformation von Quellen von innerhalb und außerhalb eines Fahrzeugs, wobei das System Folgendes aufweist:
ein Zuordnungsautoritäts-Engine (1105);
ein Fernprofilmanager-Bearbeitungssatz bzw. Fernprofilmanager-Toolset (1130);
zumindest eine Quelle von außerhalb des Fahrzeugs, die zumindest einen Content bzw. Inhalt von außerhalb des Fahrzeugs aufweist, wobei die mindestens eine Quelle von außerhalb des Fahrzeugs ausgewählt ist aus einer Gruppe, die zumindest eine Datenbank, zumindest eine Cloud-Quelle oder zumindest eine physische Struktur mit einer Kommunikationsvorrichtung aufweist; und
zumindest eine Quelle von innerhalb des Fahrzeugs, die Daten von innerhalb des Fahrzeugs für ein Fahrzeug aufweist;
wobei die Zuordnungsautorität konfiguriert ist, um den mindestens einen Inhalt von außerhalb des Fahrzeugs und die Daten von innerhalb des Fahrzeugs aufzurufen und zu kombinieren, um eine Vielzahl von dynamischen, temporären Kombinationen von Datenelementen und eine Vielzahl von Instruktionen zu erzeugen;
wobei das Fernprofilmanager-Toolset konfiguriert ist zum Ausführen der Vielzahl von dynamischen temporären Kombinationen, um Fahrzeug-Timing- bzw. Zeitsteuerungs-, Ereignis- und/oder Positionierungs-Daten, VTEP-Daten (1160) auszuführen, um die Vielzahl von Instruktionssätzen zu informieren, die durch das Zuordnungsautoritäts-Engine übermittelt wurden;
wobei das Fernprofilmanager-Toolset konfiguriert ist zur Verwendung von einem oder mehreren Elementen der VTEP-Daten, um Datenelemente von innerhalb des Fahrzeugs oder eine Berechnungsausgabe des Inhalts von außerhalb des Fahrzeugs zu synchronisieren, um eine neue Informationsdatensatzkombination zu erzeugen.

2. System nach Anspruch 1, wobei die mindestens eine Quelle von außerhalb des Fahrzeugs zumindest eine Cloud-Quelle ist, die ausgewählt ist aus der Gruppe, die eine öffentliche Cloud-Quelle, eine private Cloud-Quelle, eine hybride Cloud-Quelle oder eine Multi-Cloud-Quelle aufweist.

3. System nach Anspruch 2, wobei die Gruppe von mindestens einer Cloud-Quelle weiter eine Cloud eines Telematik-Dienstproviders, eine Kunden-Cloud oder eine Service-Provider-Cloud einer dritten Einrichtung aufweist.

4. System nach Anspruch 2, wobei die Zuordnungsautorität konfiguriert ist, die mindestens eine Cloud-Quelle zu autorisieren, direkt Daten von einem Fahrzeug CVD, einem autorisierten Cloud-Provider oder einem autorisierten Nutzer, dem Zugriff durch die Zuordnungsautorität gewährt wurde, zu empfangen oder Daten dorthin zu liefern.

5. System nach Anspruch 1, wobei die Quelle von innerhalb des Fahrzeugs einen Prozessor, ein WiFi-Funkgerät, ein Bluetooth-Funkgerät, einen Speicher, der Fahrzeugdaten speichert, und einen Verbinder bzw. Connector zum Paaren mit einem Verbindungsstecker des Fahrzeugs aufweist.

6. System nach Anspruch 1, welches weiter mindestens eine mit dem Fahrzeug verbundene Mobilitätsvorrichtung aufweist, ausgewählt aus der Gruppe, die einen Tablet-Computer, ein Mobilfunkttelefon, eine Scan-Vorrichtung, einen Beacon, eine Vorrichtung mit passiver oder aktiver Hochfrequenzkommunikation oder eine Signaturaufnahmevorrichtung aufweist.

7. System nach Anspruch 1, wobei die mindestens eine Quelle von außerhalb des Fahrzeugs zumindest eine physische Infrastruktur mit der Kommunikationsvorrichtung ist, die ausgewählt ist aus der Gruppe, welche ein Gebäude, ein Tor, einen bezüglich des Zugangs eingeschränkte bzw. gesteuerte Eingangstür, eine Parkstruktur bzw. einen Parkplatz, eine Wiegestation, eine Mautsammelstruktur, eine Tankeinrichtung und eine Fahrzeugdiensteinrichtung aufweist.

8. System nach Anspruch 1, die weiter mindestens einen Affiliate bzw. ein Zuordnungselement aufweist, der bzw. das zumindest ein anderes Fahrzeug aufweist, das autorisiert ist, um Daten mittels einer Kommunikation von Fahrzeug zu Fahrzeug zu teilen.

9. System nach Anspruch 1, wobei das Fahrzeug einen an Bord liegenden Computer mit einem Speicher mit einer Fahrzeugidentifikationsnummer, VIN, und einem Verbindungsstecker aufweist.

10. System nach Anspruch 1, wobei das Zuordnungsautoritäts-Engine eine vorbestimmte Arbeitszuordnung mit einem temporären Ereignis mit einem festgelegten Start und einer Vollendung basierend auf mindestens einer zuordenbaren Grenzbedingung aufweist.

11. System nach Anspruch 10, wobei die mindestens eine zuordenbare Grenzbedingung eine vorbestimmte Zeitperiode und/oder ein geografischer Bestimmungsort und/oder eine festgesetzte Route ist.

12. System nach Anspruch 1, wobei die mindestens eine Quelle von außerhalb des Fahrzeugs zumindest eine Datenbank und eine mobile Anwendung ist, die auf einem Mobilgerät arbeitet, und wobei die Daten von der mobilen Anwendung herkommen.

13. System nach Anspruch 1, wobei eine Integration von mobiler Anwendung zu mobiler Anwendung verwendet wird, um den Informationsdatensatz zu erzeugen.

14. System nach Anspruch 13, wobei die Integration von Anwendung zu Anwendung bei einem entfernt gelegenen Server ausgeführt wird, innerhalb einer Anwendung auf einem Mobilgerät, auf einem Gerät innerhalb des Fahrzeugs oder einer Kombination davon.

15. Verfahren (500) für Fernprofilmanagement zur Verwendung von Daten und Berechnungsinformation von Quellen von innerhalb und von außerhalb eines Fahrzeugs, wobei das Verfahren Folgendes aufweist:
Zugreifen (501), und zwar durch ein Zuordnungsautoritäts-Engine, auf Daten von innerhalb des Fahrzeugs und mindestens einen Inhalt von außerhalb des Fahrzeugs von mindestens einer Quelle von außerhalb des Fahrzeugs, die ausgewählt ist aus einer Gruppe, die zumindest eine Datenbank, zumindest eine Cloud-Quelle oder mindestens eine physische Struktur innerhalb eines Kommunikationsgerätes aufweist;
Kombinieren (502), und zwar bei dem Zuordnungsautoritäts-Engine, der Daten von innerhalb des Fahrzeugs und des mindestens einen Inhaltes von außerhalb des Fahrzeugs, um eine Vielzahl von dynamischen, temporären Kombinationen von Datenelementen und eine Vielzahl von Instruktionssätzen für ein Fahrzeug zu erzeugen;
Ausführen (503), und zwar an einem Fernprofil-Manager-Toolset bzw. Fernprofil-Manager-Bearbeitungssatz, der Vielzahl von dynamischen temporären Kombinationen, um auf Fahrzeug-, Timing- bzw. Zeitsteuerungs-, Ereignis- und/oder Positionierungsdaten, VTEP-Daten zuzugreifen, um die Vielzahl von Instruktionssätzen zu informieren, die durch das Zuordnungsautoritäts-Engine übermittelt wurden; und
Verwenden (505), und zwar bei dem Fernprofil-Manager-Toolset, von einem oder mehreren Elementen der VTEP-Daten, um eine Zeitsteuerung bzw. ein Timing zwischen den Daten von innerhalb des Fahrzeugs oder eine Berechnungsaufgabe von Inhalt von außerhalb des Fahrzeugs zu synchronisieren, um einen Informationsdatensatz für ein Fahrzeug zu erzeugen.

## Revendications

1. Un système (1300) pour utiliser des données et des informations informatiques provenant de sources embarquées et extérieures au véhicule, le système comprenant :
un moteur d'autorité d'attribution (1105);
un ensemble d'outils de gestion de profils à distance (1130);
au moins une source extérieure au véhicule comprenant au moins un contenu extérieure au véhicule, ladite au moins une source extérieure au véhicule étant choisie dans un groupe comprenant au moins une base de données, au moins une source cloud, ou au moins une structure physique dotée d'un dispositif de communication ; et
au moins une source embarquée comprenant des données embarquées pour un véhicule;
l'autorité d'attribution étant configurée pour accéder et combiner lesdits au moins un contenu extérieur au véhicule et les données embarquées pour produire un pluralité de combinaisons dynamiques et temporelles d'éléments de données et une pluralité d'instructions;
l'ensemble d'outils de gestion de profils à distance étant configuré pour exécuter la pluralité de combinaisons dynamiques et temporelles pour accéder aux données de véhicule, de timing, de l'événement et/ou du positionnement, du VTEP (1160) pour informer la pluralité d'ensembles d'instructions communiqués par le moteur d'autorité d'attribution ;
l'ensemble d'outils de gestion de profils à distance étant configuré pour utiliser un ou plusieurs éléments des données VTEP pour synchroniser des éléments de données embarqués ou une sortie informatique du contenu extérieur au véhicule, pour générer une nouvelle combinaison d'jeux de données d'informations.

2. Le système selon la revendication 1, ladite au moins une source extérieure au véhicule étant au moins une source cloud sélectionnée parmi le groupe comprenant une source cloud publique, une source cloud privé, une source cloud hybride ou une source multi-cloud.

3. Le système selon la revendication 2, le groupe de ladite au moins une source cloud comprenant en outre un cloud de fournisseur de services télématiques, un cloud client ou un cloud de fournisseur de services de tiers.

4. Système selon la revendication 2, l'autorité d'attribution étant configurée pour autoriser ladite au moins une source cloud à recevoir directement des données depuis ou fournir des données à un CVD de véhicule, un fournisseur de cloud agréé ou un utilisateur autorisé auquel l'accès a été accordé par l'autorité d'attribution.

5. Système selon la revendication 1, une source embarquée comprenant un processeur, une radio Wi-Fi, une radio BLUETOOTH, une mémoire stockant des données du véhicule et un connecteur pour l'associer à une fiche de connecteur du véhicule.

6. Système selon la revendication 1, comprenant en outre au moins un dispositif de mobilité connecté à un véhicule, sélectionné dans le groupe comprenant un ordinateur tablette, un téléphone mobile, un dispositif de numérisation, un balise, un dispositif de communication RF passif ou actif ou un dispositif de capture de signature.

7. Système selon la revendication 1, ladite au moins une source extérieure au véhicule étant au moins une infrastructure physique avec le dispositif de communication choisi dans le groupe comprenant un bâtiment, un portail, un point d'entrée à accès contrôlé, une structure de parking, une station de pesée, une structure de collecte de péage, un équipement de ravitaillement en carburant et un équipement de service de véhicule.

8. Système selon la revendication 1, comprenant en outre au moins une filiale comprenant au moins un autre véhicule autorisé à partager des données via des communications de véhicule à véhicule.

9. Système selon la revendication 1, le véhicule comprenant un ordinateur de bord avec une mémoire, ayant un numéro d'identification de véhicule, un VIN et une fiche de connecteur.

10. Système selon la revendication 1, le moteur d'autorité d'attribution comprenant une attribution de travail prédéterminé ayant un événement temporel avec un départ et un achèvement fixés, basés sur à moins une condition limite attribuable.

11. Système selon la revendication 10, ladite au moins une condition limite attribuable étant au moins une parmi une période de temps prédéterminée, une destination géographique et un itinéraire défini.

12. Système selon la revendication 1, ladite au moins une source extérieure au véhicule étant au moins une base de données et une application mobile fonctionnant sur un dispositif mobile, et les données provenant de l'application mobile.

13. Système selon la revendication 1, une intégration d'application mobile à application mobile étant utilisée pour générer le jeu de données d'information.

14. Système selon la revendication 13, l'intégration d'application mobile à application mobile étant effectuée sur un serveur à distance, dans une application sur un dispositif mobile, sur un dispositif embarqué ou une combinaison de ceux-ci.

15. Procédé (500) pour une gestion de profils à distance pour utiliser des données et des informations informatiques provenant de sources embarquées et de sources extérieures au véhicule, le procédé comprenant :
accéder (501), par un moteur d'autorité d'attribution, à des données embarquées et à au moins un contenu extérieur au véhicule provenant d'au moins une source extérieure au véhicule choisie dans un groupe comprenant au moins une base de données, au moins une source cloud ou au moins une structure physique avec un dispositif de communication ;
combiner (502), au moteur d'autorité d'attribution, les données embarquées et ledit au moins un contenu extérieur au véhicule pour produire une pluralité de combinaisons dynamiques et temporelles d'éléments de données et une pluralité de jeux d'instructions pour un véhicule ;
mettre en oeuvre (503), à un ensemble d'outils de gestion de profils à distance, la pluralité de combinaisons dynamiques et temporelles pour accéder à des données de véhicule, de timing, d'événement et/ou de positionnement, VTEP, pour informer la pluralité de jeux d'instructions communiqués par le moteur d'autorité d'attribution ; et
utiliser (505), à l'outil de gestion de profils à distance, un ou plusieurs éléments des données VTEP pour synchroniser le timing entre les données embarquées ou une sortie d'ordinateur sortie du contenu extérieur au véhicule pour générer un jeu de données d'informations pour un véhicule.
